# EUROPEAN PATENT APPLICATION

(11) **EP 4 650 141 A1**
(43) Date of publication of application: **19.11.2025**
(21) Application number: 25175898.3
(22) Date of filing: 13.05.2025
(51) Int. Cl.: B29C 45/00, B65D 65/46, C08L 67/04, C08L 101/16, F16B 33/00, B29L 1/00, F16B 25/00

(54) **ENVIRONMENTALLY FRIENDLY SCREW**

(30) Priority: 17.05.2024 TW 113205080 U
(71) Applicant: Hsu, Yu-Cheng, Taipei (TW)
(72) Inventor: Hsu, Yu-Cheng, Taipei (TW)
(74) Representative: Cabinet Chaillot

(57) **Abstract**

An environmentally friendly screw S is provided. The environmentally friendly screw includes a head portion 10 and a threaded portion 20 integrally connected. The head portion 10 and the threaded portion 20 are made from biodegradable materials by an injection molding device. The environmentally friendly screw S is provided with a parting line L located at a longitudinal section in an axial direction of the environmentally friendly screw S. The environmentally friendly screw S has advantages of biodegradability or biocompostability, light weight, low cost, and no conductivity.

## Description

### FIELD OF THE INVENTION

The present invention relates to a screw, especially to an environmentally friendly screw which is biodegradable or biocompostable.

### BACKGROUND OF THE INVENTION

Screws are one of the most important inventions since the industrialization of human society. As a common connector., the screw is mainly used to connect two objects or fix the objects.

Generally, conventional screws are produced by metals or plastics. The screw mainly includes a head portion and a threaded portion. The head portion of the screw is provided with a slot or recess with which a corresponding tool such as screwdriver is engaged for turning the screw. A part of the screw has the head portion in a hexagonal shape or other special shape, able to be held by a wrench or a special tool. The threaded portion is a cylinder with threads on its curved surface area.

A screw thread is a ridge wrapped around a cylinder of the screw along the screw's axis. During rotation, the screw is gradually fastened and connected to the object or nut by interaction between the screw thread and the object in contact (such as nut or threaded hole). The screw can be disassembled easily or tightened again, without affecting its functions. Thus the screw can be used repeatedly.

The screw is one of our daily essentials and having very wide applications including electronics industry, home appliance industry, communication equipment industry, medical equipment industry, motor vehicles manufacturing industry, computer industry, and special equipment industry. During our daily lives, screws are used in common objects or equipment ranging from watches and glasses to trains, ships, and airplanes.

However, most common materials for the conventional screws include metals and plastics. The screw made of metals has problems of easy corrosion, electric conductivity, heavy weight, and no natural degradation. As to the screw made of plastic, it is unable to be naturally degraded and thus easy to cause environmental pollution.

### SUMMARY

Therefore, it is a primary object of the present invention to provide an environmentally friendly screw provided with biodegradability or biocompostability, light weight, and no conductivity and able to solve the above problems.

In order to achieve the above object, an environmentally friendly screw according to the present invention includes a head portion and a threaded portion integrally connected with each other. Both the head portion and the threaded portion are made from biodegradable materials by an injection molding device. The environmentally friendly screw may be provided with a parting line located at a longitudinal section in an axial direction of the environmentally friendly screw.

Preferably, the biodegradable materials are produced by a mixture of biodegradable plastics with natural materials. The natural materials include bamboo powder, sugar can, potato, wheat, cassava, and corn starch.

Preferably, the biodegradable materials are made from recyclable plastics mixed with natural materials. The recyclable plastics include plastic number 1-polyethylene terephthalate (PET), plastic number 2-high density polyethylene (HDPE), plastic number 3-polyvinyl chloride (PVC), plastic number 4-low density polyethylene (LDPE), plastic number 5-polypropylene (PP), and plastic number 6-polystyrene (PS). The natural materials include bamboo powder, sugar can, potato, wheat, cassava, and corn starch.

Preferably, the biodegradable material is made from polylactide (PLA) resin mixed with bamboo powder.

Preferably, the biodegradable material is produced by a mixture of polylactide (PLA) resin with bamboo fiber.

Preferably, the biodegradable material is polybutylene succinate (PBS).

Preferably, the biodegradable material is made from a mixture of natural plant fiber powder and plant-based adhesives. The natural plant fiber powder is either bamboo fiber or bamboo powder. The plant-based adhesive can be natural resin or pine juice.

The present environmentally friendly screw has advantages of no conductivity, EMI (electrical magnetic interference) shielding, light weight, no rust, low cost, and biodegradability or biocompostability after discarded and can be applied to a plurality of industries without causing pollutions to the environment. The consumption of metal resources is also reduced.

As to implementations, technical features, and functions of the present invention, please refer to the following descriptions and related figures.

### BRIEF DESCRIPTION OF THE DRAWINGS

Fig. 1 is a perspective view of an embodiment of an environmentally friendly screw according to the present invention;
Fig. 2 is a front view of the embodiment shown in Fig. 1 according to the present invention;
Fig. 3A is a perspective view of an embodiment of an environmentally friendly screw provided with a head portion having a cross slot according to the present invention;
Fig. 3B is a perspective view of an embodiment of an environmentally friendly screw provided with a head portion having a hexagonal recess according to the present invention;
Fig. 3C is a perspective view of an embodiment of an environmentally friendly screw provided with a hexagonal head portion having a hexagonal recess according to the present invention;
Fig. 4 is a sectional view taken along line A-A of the embodiment in Fig. 1 according to the present invention.

### DETAILED DESCRIPTION

In embodiments disclosed in the following specification and figure, directions (such as upper, lower, right, left, front, and rear) are shown in figures and used to explain relationships of components with respect to one another (such as positons, connections, and actions). Basically, the directions mentioned will be appropriate when the positions of the components or structures mentioned in the specification match those shown in the figures. If the positions of the components or structures mentioned in the specification are changed, the directions mentioned should also be changed correspondingly.

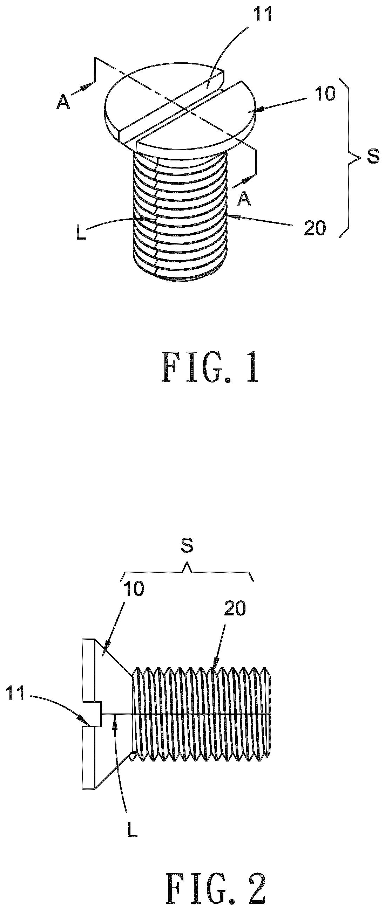

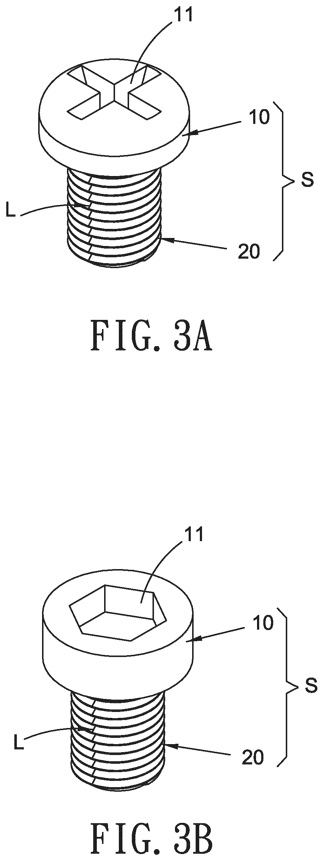

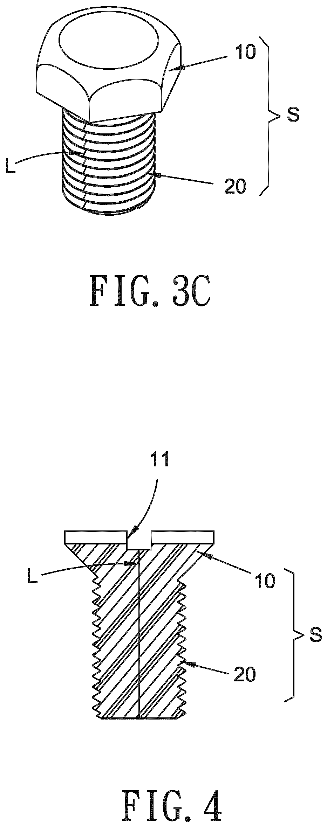

Refer to Fig, 1 and Fig. 4, perspective views and a sectional view of an embodiment of an environmentally friendly screw are provided. In a preferred embodiment, an environmentally friendly screw S according to the present invention includes a head portion 10 and a threaded portion 20 integrally connected with each other (as shown in Fig. 4). The head portion 10 includes a slot or recess 11 for engagement of corresponding tools such as screwdriver to rotate the screw S. The shape of the slot or the recess 11 includes, but not limited to, a cross shape (as shown in Fig. 3A), a horizontal indentation (as shown in Fig. 1), a hexagonal socket (as shown in Fig. 3B), a hexalobular socket (star-shape), a polygonal shape, and other shapes for special uses. In other preferred embodiments, the shape of the head portion 10 includes, but not limited to, a hexagonal prism (as shown in Fig. 3C), a flat head (as shown in Fig. 1), and a cylinder (as shown in Fig. 3B). The head potion 10 which is a hexagonal prism shown in Fig. 3C is generally not provided with the slot or recess 11, able to be rotated directly by a tool such as wrench.

The improvement of the present environmentally friendly screw S is that the environmentally friendly screw S is made from biodegradable materials by an injection molding device. In other words, the head portion 10 and the threaded portion 20 of the environmentally friendly screw S are integrally connected. The environmentally friendly screw S is provided with a parting line L (as shown in Fig. 2) which is located at a longitudinal section in an axial direction of the environmentally friendly screw S.

In a preferred embodiment, the biodegradable materials are made from mixtures of biodegradable plastics with natural materials which includes bamboo powder, sugar can, potato, wheat, cassava, and corn starch.

**In** another preferred embodiment, the biodegradable materials are made from recyclable plastics mixed with natural materials. The recyclable plastics include plastic number 1-polyethylene terephthalate (PET), plastic number 2-high density polyethylene (HDPE), plastic number 3-polyvinyl chloride (PVC), plastic number 4-low density polyethylene (LDPE), plastic number 5-polypropylene (PP), and plastic number 6-polystyrene (PS). The natural materials include bamboo powder, sugar can, potato, wheat, cassava, and corn starch.

In a further preferred embodiment, the biodegradable material is produced by a mixture of polylactide (PLA) resin with bamboo powder. In a further preferred embodiment, the biodegradable material is made from a mixture of polylactide (PLA) resin with bamboo fiber which is extracted from naturally-growing bamboo through mechanical or physical process. The bamboo powder is produced by processing natural bamboo into a fine powder through grinding and milling techniques. A particle size of the bamboo powder can be in millimeter (10⁻³m), micrometer (10⁻⁶m), or nanometer (10⁻⁹m) scale.

In a further preferred embodiment, the biodegradable material is polybutylene succinate (PBS). In a further preferred embodiment, the biodegradable material is made from a mixture of natural plant fiber powder and plant-based adhesives. The natural plant fiber powder is selected from bamboo fiber and bamboo powder. The plant-based adhesive can be natural resin or pine juice.

The biodegradable material mentioned above is also known as biodegradable plastic or green and sustainable plastic. The PBS is non-toxic to the environment and able to be degraded into water and carbon dioxide or methane due to light, heat, oxygen, humidity, microbes in the environment after being buried and then returned to nature.

The present environmentally friendly screw S has advantages of no conductivity, EMI (electrical magnetic interference) shielding, light weight, no rust, low cost, and biodegradability or biocompostability and can be applied to a plurality of industries including electronics industry, home appliance industry, communication equipment industry, medical equipment industry, motor vehicles manufacturing industry, computer industry, and special equipment industry.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. An environmentally friendly screw S comprising a head portion 10 and a threaded portion 20 integrally connected with each other; wherein the head portion 10 and the threaded portion 20 are made from biodegradable materials by an injection molding device.

2. The environmentally friendly screw S as claimed in claim 1, wherein the biodegradable materials include biodegradable plastics and natural materials; the natural material is selected from the group consisting of bamboo powder, sugar can, potato, wheat, cassava, and corn starch.

3. The environmentally friendly screw S as claimed in claim 1, wherein the biodegradable materials include recyclable plastics and natural materials; the recyclable plastic is selected from the group consisting of plastic polyethylene terephthalate (PET), high density polyethylene (HDPE), polyvinyl chloride (PVC), low density polyethylene (LDPE), polypropylene (PP), and polystyrene (PS); the natural material is selected from the group consisting of bamboo powder, sugar can, potato, wheat, cassava, and corn starch.

4. The environmentally friendly screw S as claimed in claim 1, wherein the biodegradable materials include polylactide (PLA) resin and bamboo powder.

5. The environmentally friendly screw S as claimed in claim 1, wherein the biodegradable materials include polylactide (PLA) resin and bamboo fiber.

6. The environmentally friendly screw S as claimed in claim 1, wherein the biodegradable material is polybutylene succinate (PBS).

7. The environmentally friendly screw S as claimed in claim 1, wherein the biodegradable materials include natural plant fiber powder and plant-based adhesives; the natural plant fiber powder is bamboo fiber or bamboo powder; the plant-based adhesive is natural resin or pine juice.
